# EUROPEAN PATENT APPLICATION

(11) **EP 3 159 534 A1**
(43) Date of publication of application: **26.04.2017**
(21) Application number: 15810826.6
(22) Date of filing: 28.05.2015
(51) Int. Cl.: F02M 63/00, F02D 41/00, F02D 45/00, F02M 51/00

(54) **COMMON RAIL TYPE FUEL INJECTION SYSTEM**

(30) Priority: 23.06.2014 JP 2014128058
(71) Applicant: Hino Motors, Ltd., Hino-shi, Tokyo 191-8660 (JP)
(72) Inventor: TAKAYAMA, Hidemasa, Hino-shi, Tokyo 191-8660 (JP)
(74) Representative: D Young & Co LLP
(86) International application number: PCT/JP2015/065378
(87) International publication number: WO 2015/198785

(57) **Abstract**

A common rail type fuel injection system provided in an engine with a plurality of cylinders, configured to inject high-pressure fuel stored in a common rail from injectors provided on each of the cylinders under fuel injection control performed by a control unit, and comprising: a plurality of communication lines each of which connects the control unit to a one of the injectors, wherein each of the injectors includes a storage unit configured to store correction information set according to injection characteristics, and a communication unit configured to send the correction information stored in the storage unit to the control unit via a one of the communication lines.

## Description

### Technical Field

An aspect of the invention relates to a common rail type fuel injection system.

### Background Art

High-pressure fuel, which is stored in a common rail, is injected from injectors of the respective cylinders in a common rail type fuel injection system. The injectors have inherent injection characteristics. For this reason, even though the injectors inject fuel at the same common rail pressure and the same injection time, a difference in the amount of injected fuel occurs between the injectors. Accordingly, injection time of each injector needs to be corrected. Patent Literature 1 discloses a common rail type fuel supply system that calculates an injection time-correction value by an injection time-correction value map based on common rail pressure and the amount of injected fuel to be instructed and injects fuel by using the injection time-correction value.

### Citation List

### Patent Literature

Patent Literature 1: Japanese Unexamined Patent Publication No. 2013-108403

### Summary of Invention

### Technical Problem

A code, which stores correction information set according to injection characteristics, is given to each of the injectors. If the correction information of the code of each injector is not written in the control unit, the injection time of each injector cannot be corrected with high accuracy. Particularly, when an injector is replaced due to a breakdown or the like, a person needs to rewrite correction information of a code of the injector. However, there is a case in which the person may forget to rewrite the code in the work performed by the person. In this case, the control unit performs correction by using incorrect correction information. Patent Literature 1 does not disclose the rewriting of the injection time-correction value map.

Accordingly, a common rail type fuel injection system, which can reliably use correct correction information of each injector by a control unit, is required in this technical field.

### Solution to Problem

A common rail type fuel injection system according to an aspect of the invention is provided in an engine with a plurality of cylinders, configured to inject high-pressure fuel stored in a common rail from injectors provided on each of the cylinders under fuel injection control performed by a control unit, and comprising: a plurality of communication lines each of which connects the control unit to a one of the injectors, wherein each of the injectors includes a storage unit configured to store correction information set according to injection characteristics, and a communication unit configured to send the correction information stored in the storage unit to the control unit via a one of the communication lines.

Since the common rail type fuel injection system sends correction information of each injector, which is stored in the storage unit of each injector, to the control unit, the control unit can perform correction by reliably using correct correction information of each injector in each injector. In the case of this structure, correction information does not need to be written or rewritten in the control unit by work that is performed by a person. Accordingly, correction, which is performed in the control unit by using incorrect correction information, cannot occur.

### Advantageous Effects of Invention

According to an aspect of the invention, the control unit can reliably use correct correction information of each injector.

### Brief Description of Drawings

FIG. 1 is a diagram illustrating the schematic structure of a diesel engine that includes a common rail type fuel injection system according to an embodiment.
FIG. 2 illustrates an example of the respective correction points that are set for the respective correction-point-set pressures stored in storage units of injectors of FIG. 1.

### Description of Embodiments

A common rail type fuel injection system according to an embodiment of the invention will be described below with reference to the drawings. Meanwhile, the same or corresponding elements in the respective drawings will be denoted by the same reference numerals and the repeated description thereof will be omitted.

In this embodiment, a control unit according to an aspect of the invention is applied to a common rail type fuel injection system that is provided in a diesel engine for a vehicle. The common rail type fuel injection system according to this embodiment is controlled by an engine ECU [Electronic Control Unit] that is a control unit for controlling a diesel engine. In this embodiment, codes are given to injectors, respectively. This code is a code that represents correction information set according to inherent injection characteristics of the injector.

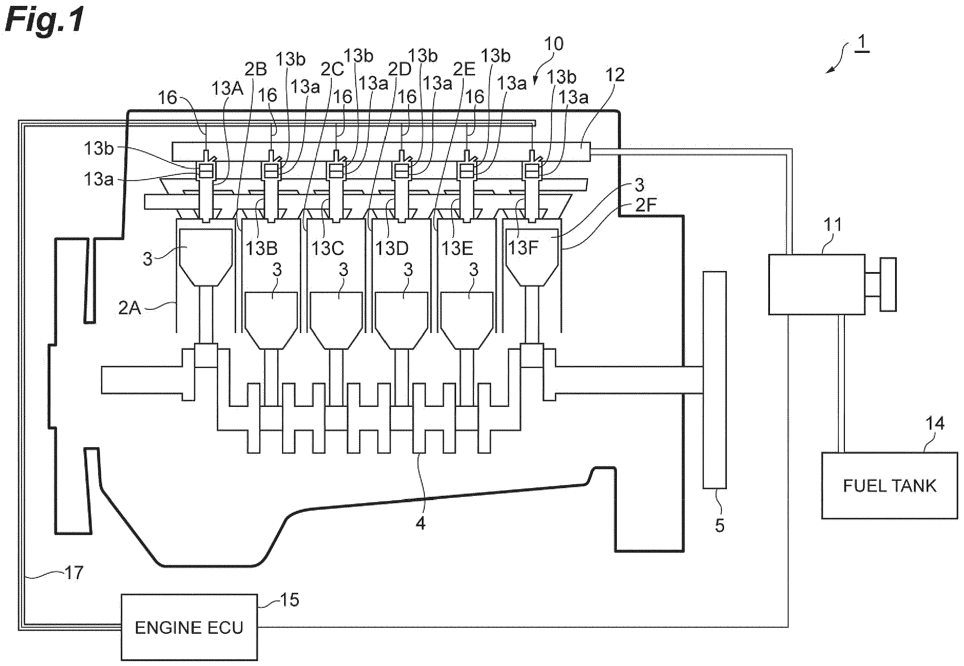

First, the structure of a diesel engine 1 will be described with reference to FIG. 1. FIG. 1 is a diagram illustrating the schematic structure of the diesel engine 1 that includes the common rail type fuel injection system according to the embodiment.

The diesel engine 1 is an inline 6-cylinder diesel engine, and includes six cylinders (a first cylinder 2A, a second cylinder 2B, a third cylinder 2C, a fourth cylinder 2D, a fifth cylinder 2E, and a sixth cylinder 2F). Each of a plurality of pistons 3 is received in each of the cylinders 2A to 2F. The piston 3 reciprocates in each of the cylinders 2A to 2F. One end portion of each piston 3 is mounted on a crankshaft 4. The crankshaft 4 converts the reciprocation of each piston 3 into rotation. A flywheel 5 is mounted on one end portion of the crankshaft 4. The flywheel 5 stores the rotational kinetic energy of the crankshaft 4 and supplies the rotational kinetic energy to driving wheels (not illustrated). Further, the diesel engine 1 includes a common rail type fuel injection system 10 that injects fuel into the respective cylinders 2A to 2F. Meanwhile, the diesel engine 1 is an inline 6-cylinder diesel engine in this embodiment, but may have another disposition, such as V-type disposition or horizontally opposed disposition, in terms of the disposition of cylinders. Further, the number of cylinders may be four or the like other than six.

In an intake stroke of the diesel engine 1, the piston 3 moves down to a bottom dead center in each of the cylinders 2A to 2F and takes air in. In a compression stroke, the piston 3 moves up to a top dead center in each of the cylinders 2A to 2F and compresses and heats air. In an expansion stroke, fuel is injected to high-temperature and high-pressure air, which is present in the cylinders 2A to 2F, by the common rail type fuel injection system 10, self-ignition occurs, and expanded combustion gas pushes each piston 3 down to the bottom dead center. In an exhaust stroke, the piston 3 moves up to the top dead center in each of the cylinders 2A to 2F by the inertia of the flywheel 5, expansion occurring in the other cylinders, and the like and pushes combustion gas to the outside of each of the cylinders 2A to 2F. The reciprocation of the piston 3 between the top dead center and the bottom dead center is transmitted to the crankshaft 4, and reciprocation is converted into rotation.

The common rail type fuel injection system 10 will be described with reference to FIG. 1. The common rail type fuel injection system 10 includes a supply pump 11, a common rail 12, and six injectors (a first injector 13A, a second injector 13B, a third injector 13C, a fourth injector 13D, a fifth injector 13E, and a sixth injector 13F).

The supply pump 11 is a high-pressure pump that supplies fuel (light oil) to the common rail 12 from a fuel tank 14. The supply pump 11 pressurizes fuel and pumps the high-pressure fuel into the common rail 12. The supply pump 11 is controlled by an engine ECU 15, so that the pressurized state of fuel and the amount of fuel to be supplied, and the like are adjusted. Accordingly, a pressure in the common rail 12 (hereinafter, referred to as a "common rail pressure") is also adjusted by the control of the supply pump 11 that is performed by the engine ECU 15.

The common rail 12 is a tubular member that stores the high-pressure fuel pumped by the supply pump 11, and extends along the six cylinders 2A to 2F that are arranged in series. The six injectors 13A to 13F, which correspond to the cylinders 2A to 2F, respectively, are connected to the common rail 12, and the common rail 12 supplies the high-pressure fuel to each of the injectors 13A to 13F. Accordingly, the common rail pressure corresponds to the pressure of fuel to be injected from each of the injectors 13A to 13F.

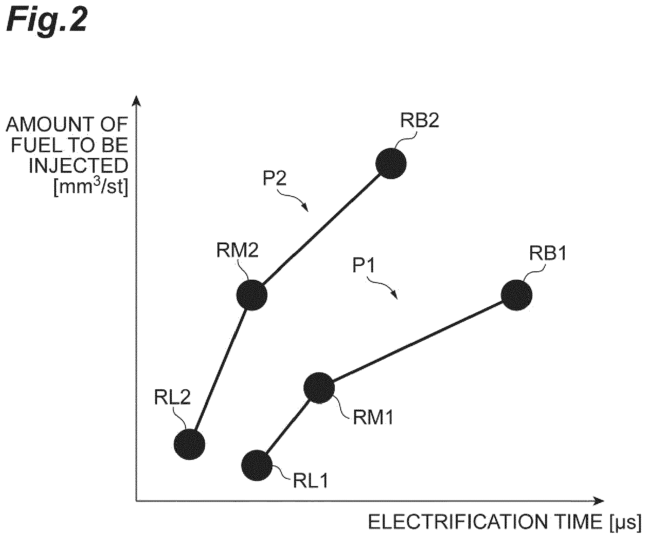

The injectors 13A to 13F will be described with reference to FIGS. 1 and 2. FIG. 2 illustrates an example of the respective correction points that are set for the respective correction-point-set pressures stored in storage units of the injectors 13A to 13F.

The injectors 13A to 13F are units that are provided in the cylinders 2A to 2F and inject fuel into the cylinders 2A to 2F in the form of mist, respectively. Each of the injectors 13A to 13F is an electronically controlled injector and includes a solenoid valve. The solenoid valve is a normally-closed valve, and is opened when current flows in the solenoid valve (the solenoid valve is electrified). The solenoid valve of each of the injectors 13A to 13F is opened according to control (electrification) performed by the engine ECU 15, so that the amount of fuel to be injected into each of the cylinders 2A to 2F is adjusted. Accordingly, electrification time in which current is allowed to flow in each of the injectors 13A to 13F by the engine ECU 15 corresponds to injection time in which fuel is injected from each of the injectors 13A to 13F. Since the common rail pressure corresponds to the injection pressure of each of the injectors 13A to 13F as described above, the amount of fuel to be injected from each of the injectors 13A to 13F is determined depending on the common rail pressure and the electrification time in which current is allowed to flow by the engine ECU 15.

Meanwhile, the injectors 13A to 13F have inherent injection characteristics, respectively. For this reason, even though the six injectors 13A to 13F inject fuel at the same common rail pressure and the same injection time, a difference in the amount of injected fuel occurs between the six injectors 13A to 13F. Accordingly, in order to allow the same target amount of fuel, which is to be injected, to be injected from each of the six injectors 13A to 13F at the same common rail pressure, injection time (electrification time) needs to be corrected according to the injection characteristics of the injectors 13A to 13F. For this reason, codes in which information used to correct the electrification time is stored are given to the injectors 13A to 13F, respectively.

The code, which is given to each of the injectors 13A to 13F, will be described. The code is a code, such as a two-dimensional bar code, which can store a predetermined amount of information, and stores correction information of each of the injectors 13A to 13F. This correction information is formed of correction points representing a relationship between the amount of fuel to be injected and electrification time. The correction points are set according to a plurality of predetermined common rail pressures (corresponding to injection pressures). Hereinafter, the common rail pressures, which are used to set the correction points, are referred to as "correction-point-set pressures". The correction-point-set pressures are a plurality of pressures set in the range of the pressures of fuel that can be injected from the injectors 13A to 13F, and each correction point is set so as to correspond to each correction-point-set pressure. One or more correction points are set for one correction-point-set pressure according to the injection characteristics of each injector. For example, three correction points, that is, a correction point corresponding to a large amount of fuel to be injected, a correction point corresponding to a small amount of fuel to be injected, and a correction point, which corresponds to a medium amount of fuel to be injected and an inflection point between these correction points, are set for one correction-point-set pressure. When multi-stage injection, such as pre-injection and after-injection in addition to main injection, is performed, the correction point corresponding to a large amount of fuel to be injected and the correction point corresponding to a medium amount of fuel to be injected are used to correct the electrification time of the main injection, and the correction point corresponding to a small amount of fuel to be injected is used to correct the electrification time of the pre-injection and the electrification time of the after-injection. Meanwhile, since normally-closed solenoid valves are used in the injectors 13A to 13F, correction points representing a relationship between the amount of fuel to be injected and electrification time are used as the correction information but injection time may be used instead of the electrification time.

FIG. 2 illustrates an example of the respective correction points that are set for the respective correction-point-set pressures. In FIG. 2, a horizontal axis represents electrification time [µs (second)] and a vertical axis represents [mm³/st (stroke)]. In the case of this example, there are two correction-point-set pressures P1 and P2 and the correction-point-set pressure P1 is lower than the correction-point-set pressure P2. A correction point RB1 corresponding to a large amount of fuel to be injected, a correction point RM1 corresponding to a medium amount of fuel to be injected, and a correction point RL1 corresponding to a small amount of fuel to be injected are set for the correction-point-set pressure P1. A correction point RB2 corresponding to a large amount of fuel to be injected, a correction point RM2 corresponding to a medium amount of fuel to be injected, and a correction point RL2 corresponding to a small amount of fuel to be injected are set for the correction-point-set pressure P2. The example illustrated in FIG. 2 is exemplary, and there may be three or more correction-point-set pressures. Further, only one or two correction points may be set for a correction-point-set pressure in a case in which there is no inflection point, and four or more correction points may be set for a correction-point-set pressure in a case in which there are a plurality of inflection points.

Each of the injectors 13A to 13F includes a storage unit 13a and a communication unit 13b that are provided in the injector. In this embodiment, the storage unit 13a corresponds to a storage unit described in claims and the communication unit 13b corresponds to a communication unit described in claims.

The storage unit 13a is a storage unit that stores correction information stored in the code of the injector (correction points representing a relationship between the amount of fuel to be injected, which is set for each of a plurality of correction-point-set pressures, and electrification time). The storage unit 13a is formed of, for example, an information storage circuit where information can be read out and written and which stores the written information. The information storage circuit is formed of, for example, an IC [Integrated Circuit] chip. Correction information is written in the storage unit 13a in advance by the code of the injector before the shipment of the injector, and the storage unit 13a stores the correction information.

The communication unit 13b is a communication unit that sends information to the engine ECU 15 through a communication line 16. The communication unit 13b may also receive information from the engine ECU 15. The communication unit 13b includes, for example, a communication driver and a communication circuit. The communication driver and the communication circuit may be integrated with the IC chip that forms the above-mentioned storage unit 13a. When one IC chip forms the storage unit 13a and the communication unit 13b in this way, the injectors 13A to 13F can be reduced in size. When an ignition switch is turned on and the engine ECU 15 is operated, the communication unit 13b sends the correction information, which is stored in the storage unit 13a, to the engine ECU 15 through the communication line 16. This sending may be voluntarily performed by the injectors 13A to 13F or may be performed according to a request from the engine ECU 15.

Meanwhile, there is a possibility that an arbitrary injector among the six injectors 13A to 13F may be replaced due to a breakdown or the like while the ignition switch is turned off. However, there is no possibility that the injector may be replaced while the ignition switch is turned on. Accordingly, the sending of the correction information to the engine ECU 15 from each of the injectors 13A to 13F has only to be performed at least one time before the start of initial fuel injection control until the ignition switch is turned off after the ignition switch is turned on.

The communication line 16 is a communication line that is provided on each of the injectors 13A to 13F and connects each of the injectors 13A to 13F to the engine ECU 15. The communication lines 16 of the injectors 13A to 13F are included in a wire harness 17 that is wired between the engine ECU 15 and the injectors 13A to 13F. In this embodiment, the communication line 16 corresponds to a communication line described in claims. Meanwhile, an electrification line (not illustrated), which connects each of the injectors 13A to 13F to the engine ECU 15, is also provided to electrify each of the injectors 13A to 13F from the engine ECU 15.

The engine ECU 15 will be described. The engine ECU 15 is an electronic control unit that includes a CPU [Central Processing Unit], a ROM [Read Only Memory], a RAM [Random Access Memory], and the like and generally controls the diesel engine 1. Here, only processing for the common rail type fuel injection system 10, which is one function of the engine ECU 15, will be described. In this embodiment, the engine ECU 15 corresponds to a control unit described in claims.

When the ignition switch is turned on and the engine ECU 15 starts to be operated, the engine ECU 15 receives the correction information sent from the injectors 13A to 13F through the communication lines 16, respectively. In regard to the reception of the correction information, the engine ECU 15 has only to receive the correction information at least only one time before performing the initial fuel injection control in a case in which an area for storing the correction information of each of the injectors 13A to 13F is ensured in a part of the RAM or the like of the engine ECU 15. In this case, the engine ECU 15 stores the received correction information of each of the injectors 13A to 13F in the ensured area, and reads out correction information necessary for correction whenever performing fuel injection control. The engine ECU 15 always communicates with the injectors 13A to 13F and has only to receive necessary correction information whenever performing fuel injection control in a case in which this area is not ensured in the RAM or the like. In all case, the correction of the electrification time of each of the injectors 13A to 13F in the fuel injection control to be described below can be performed by using the correction control of the code that is given to each of the injectors 13A to 13F. Meanwhile, the engine ECU 15 includes a communication driver and a communication circuit that are used to communicate with the injectors 13A to 13F and the like.

The fuel injection control will be described. The engine ECU 15 sets a target common rail pressure according to the current operating state of a vehicle with reference to a map that represents a relationship between the operating state of a vehicle and the common rail pressure. Then, the engine ECU 15 controls the supply pump 11 so that a pressure in the common rail 12 becomes the target common rail pressure.

The engine ECU 15 acquires a target amount of fuel, which is to be injected by a master injector, according to the current operating state of the vehicle with reference to a map that represents a relationship between the operating state of the vehicle and the amount of fuel to be injected by the master injector. In addition, the engine ECU 15 acquires electrification time of the master injector that is necessary to inject the target amount of fuel to be injected at the current common rail pressure (the target common rail pressure or a pressure close to the target common rail pressure) with reference to a map that represents a relationship between the amount of fuel, which is to be injected by the master injector at each common rail pressure, and electrification time. Meanwhile, the master injector is a virtual injector that is a reference of the injectors 13A to 13F to be actually assembled. The amount of correction of each of the injectors 13A to 13F is time which is longer or shorter than the electrification time set for the master injector. The operating state of the vehicle can be determined from engine speed, an engine load according to an accelerator position, and the like.

The engine ECU 15 acquires the electrification time of an injector, which is necessary to inject the target amount of fuel to be injected at the current common rail pressure, from the respective correction points set for the correction-point-set pressure of each of the injectors 13A to 13F by using the correction information that is sent from the corresponding injector. For example, when there is a correction-point-set pressure corresponding to the current common rail pressure, the engine ECU 15 extracts two correction points (there is also a case in which one correction point is present), between which a target amount of fuel to be injected is present, from the correction points set for the correction-point-set pressure and calculates the electrification time of the injector from the two extracted correction points. Further, when there is no correction-point-set pressure corresponding to the current common rail pressure, the engine ECU 15 selects two correction-point-set pressures, between which the current common rail pressure is present, extracts two correction points (there is also a case in which one correction point is present), between which a target amount of fuel to be injected is present, from the correction points set for each of the correction-point-set pressures, and calculates the electrification time of the injector by using a total of four extracted correction points (there is also a case in which a total of three or two extracted correction points are present). A difference between the electrification time of each of the injectors 13A to 13F and the electrification time of the master injector corresponds to the amount of correction of the electrification time of each of the injectors 13A to 13F. The engine ECU 15 sequentially supplies current to the respective injectors 13A to 13F according to injection timings of the respective injectors 13A to 13F during the electrification time of the respective injectors 13A to 13F.

The above-mentioned common rail type fuel injection system 10 includes the storage units 13a for the respective injectors 13A to 13F, and sends correction information (the codes of the injectors), which is stored in the storage units 13a, to the engine ECU 15. Accordingly, the engine ECU 15 can perform correction by reliably using correct correction information of each injector in each of the injectors 13A to 13F. In the case of this structure, correction information does not need to be written or rewritten in the engine ECU 15 by work that is performed by a person. Accordingly, correction, which is performed in the engine ECU 15 by using incorrect correction information, cannot occur. Therefore, even though the injector is replaced due to a breakdown or the like, electrification time (injection time) of all the injectors 13A to 13F including the replaced injector can be corrected with high accuracy.

Further, the common rail type fuel injection system 10 uses correction points, which represent a relationship between the amount of fuel to be injected set for each of a plurality of correction-point-set pressures according to injection characteristics and electrification time, as the correction information. Since the electrification time is corrected by using the correction points, the engine ECU 15 can correct electrification time with high accuracy according to inherent injection characteristics of the injector.

Meanwhile, when each injector has a communication function that can send information to the control unit, it is also considered that each injector is provided with a sensor (for example, a sensor detecting the injection pressure of the injector), a detection value detected by the sensor is sent to a control unit, and the control unit performs fuel injection control by using the detection value of the sensor of each injector. In the case of this structure, since a detection element of the sensor, a detection circuit, or the like needs to be provided in the injector to detect injection pressure or the like, the injector is increased in size. For this reason, a large mounting space needs to be ensured around a cylinder head on which the injectors are mounted. Further, there is also a problem that fuel injection control is affected by the breakdown of the sensor or the false detection of the sensor in a case in which the injectors are provided with sensors. Incidentally, since it is possible to obtain sufficient performance by only correcting injection time (electrification time) by using the correction information set from inherent injection characteristics of the injectors in order to allow all the injectors to inject the amount of fuel to be injected according to plan, it is thought that feedback control or the like does not need to be performed on each injector by using detected injection pressure or the like.

The embodiment of the invention has been described above, but the invention is embodied in various forms without being limited to the above-mentioned embodiment.

For example, in the embodiment, correction information set according to the inherent injection characteristics of the injectors has been correction points, which represent a relationship between the amount of fuel to be injected set for each of a plurality of correction-point-set pressures and electrification time, but may be other correction information, such as a correction curve or a correction straight line, which represents a relationship between the amount of fuel to be injected set for each of correction-point-set pressures and electrification time. More accurate correction can be performed in a case in which correction is performed by using the correction curve or the correction straight line.

Further, the respective correction points set for each correction-point-set pressure have been stored in the code given to each injector and the information of the code has been stored in the storage unit of the injector in the embodiment, but objects other than the code may be used. For example, the respective correction points set for each correction-point-set pressure are stored in an IC chip memory and information is written in the storage unit of the injector by using the IC chip memory. When the IC chip memory is used, more correction information can be written. Furthermore, correction information of each injector is stored in a computer and may be written in the storage unit of each injector from the computer. In this case, the code of each injector, the IC chip memory, and the like are not necessary.

Moreover, the storage unit and the communication unit have been provided in an injector body including a solenoid valve in the embodiment. However, at least one of the storage unit and the communication unit may be provided outside the injector body, and the unit provided outside the injector body may be connected to the injector body through a communication line. In the case of this structure, the injector body can be reduced in size. Accordingly, it is possible to reduce the size of a mounting space for the injector body in the vicinity of the cylinder head where there is no space to spare. Further, the storage unit or/and the communication unit provided outside the injector body can be disposed at a position where there is a space to spare in an engine room.

### Industrial Applicability

According to an aspect of the invention, the control unit can reliably use correct correction information of each injector.

### Reference Signs List

- 1:: diesel engine
- 2A:: first cylinder
- 2B:: second cylinder
- 2C:: third cylinder
- 2D:: fourth cylinder
- 2E:: fifth cylinder
- 2F:: sixth cylinder
- 3:: piston
- 4:: crankshaft
- 5:: flywheel
- 10:: common rail type fuel injection system
- 11:: supply pump
- 12:: common rail
- 13A:: first injector
- 13B:: second injector
- 13C:: third injector
- 13D:: fourth injector
- 13E:: fifth injector
- 13F:: sixth injector
- 13a:: storage unit
- 13b:: communication unit
- 14:: fuel tank
- 15:: engine ECU
- 16:: communication line
- 17:: wire harness

## Claims

1. A common rail type fuel injection system provided in an engine with a plurality of cylinders, configured to inject high-pressure fuel stored in a common rail from injectors provided on each of the cylinders under fuel injection control performed by a control unit, and comprising:
a plurality of communication lines each of which connects the control unit to a one of the injectors,
wherein each of the injectors includes a storage unit configured to store correction information set according to injection characteristics, and a communication unit configured to send the correction information stored in the storage unit to the control unit via a one of the communication lines.

2. The common rail type fuel injection system according to claim 1, wherein the correction information indicates a relationship between the amount of fuel to be injected set for each of a plurality of set pressures according to the injection characteristics and information about injection time.
